# EUROPÄISCHE PATENTSCHRIFT

(11) **EP 3 095 114 B1**
(45) Veröffentlichungstag und Bekanntmachung des Hinweises auf die Patenterteilung: **20.11.2019**
(21) Anmeldenummer: 14821170.9
(22) Anmeldetag: 19.12.2014
(51) Int. Cl.: G10L 15/32, G10L 15/30, G10L 15/22

(54) **VERFAHREN UND SYSTEM ZUR ERZEUGUNG EINES STEUERUNGSBEFEHLS**
METHOD AND SYSTEM FOR GENERATING A CONTROL COMMAND
PROCÉDÉ ET SYSTÈME POUR GÉNÉRER UNE INSTRUCTION DE COMMANDE

(30) Priorität: 15.01.2014 DE 102014200570
(43) Veröffentlichungstag der Anmeldung: 23.11.2016
(73) Patentinhaber: Bayerische Motoren Werke Aktiengesellschaft, 80809 München (DE)
(72) Erfinder: HABERL, Wolfgang, 81547 München (DE); KNEBEL, Karsten, 80636 München (DE)
(86) Internationale Anmeldenummer: PCT/EP2014/078730
(87) Internationale Veröffentlichungsnummer: WO 2015/106930

(56) Entgegenhaltungen:
- JP-A- 2010 085 536
- JP-A- 2013 218 095
- US-A1- 2012 179 457
- US-A1- 2012 215 539

## Beschreibung

Die Erfindung betrifft ein Verfahren zur Erzeugung eines Steuerungsbefehls aus einer mündlichen Äußerung und ein System zur Durchführung eines entsprechenden Verfahrens.

Spracherkennungssysteme oder Sprachdialogsysteme vereinfachen die Bedienung bestimmter Geräte, indem sie eine Sprachsteuerung bestimmter Funktionen ermöglichen. Dies ist besonders in Situationen von Nutzen, in denen, wie beim Fahren eines Fahrzeugs, eine manuelle Bedienung der Geräte unerwünscht oder nicht erlaubt ist. In einem Fahrzeug können beispielsweise ein Multimediasystem, ein Navigationssystem oder eine Freisprechanlage bzw. ein Mobiltelefon sprachgesteuert bedient werden.

Es existieren hierfür eingebettete Spracherkennungssysteme oder geräteintegrierte Sprachdialogsysteme, die eine Reihe von Befehlen erkennen und verarbeiten können. Diese Systeme sind lokal auf dem Gerät (Fahrzeug, Mobiltelefon, o.ä.) des Benutzers verfügbar. Aufgrund einer begrenzten Rechenleistung der lokalen Recheneinheit können frei formulierte Sprachbefehle jedoch nicht verstanden werden oder benötigen viel Zeit zur Verarbeitung. Oft muss sich der Benutzer an die Befehlsstruktur des Spracherkennungssystems anpassen oder eine vorgegebene Kommandosyntax einhalten. Auch ist die Fehlerrate unter Umständen hoch.

Um Sprachbefehle frei formuliert äußern zu können, werden server-basierte Spracherkennungssysteme verwendet. Hierzu wird die Spracheingabe an einen Spracherkennungs-Server gesendet und dort mit einer Erkennungssoftware verarbeitet. Eine höhere verfügbare Rechenleistung und ein größerer Umfang des hinterlegten Vokabulars ermöglichen dabei eine bessere Treffsicherheit. Damit können auch umgangs- oder alltagssprachliche Formulierungen erkannt und verstanden werden. Beispiele für serverbasierte Spracherkennungssysteme finden sich beispielsweise in JP 2010 085536 A oder JP 2013 218095 A. Die US 2012/0179457 A1 offenbart ein Spracherkennungssystem mit mehreren, verteilten Spracherkennungseinrichtungen.

Es gibt jedoch Teile von Äußerungen, die von einer server-basierten Spracherkennung nicht oder nur schlecht verarbeitet werden können. Bei nicht oder schlecht erkannten Teilen einer Äußerung kann es sich insbesondere um einzelne Wörter handeln, die einem benutzerspezifischen Vokabular entstammen. Beispiele für benutzerspezifisches Vokabular sind Kontakte in einem Adress- oder Telefonbuch oder Titel in einer Musiksammlung.

Eine Lösung für dieses Problem besteht darin, dem Spracherkennungs-Server Zugriff auf eine Datenbank mit zu erkennenden Nutzerdaten (Adressbuch, Musiksammlung) zu gewähren. Diese Daten können lokal auf einem Gerät (z.B. Bordcomputer des Fahrzeugs, Mobiltelefon) beim Benutzer vorhanden sein. Die Daten können auf den Server geladen und so dem server-basierten Spracherkennungssystem zugänglich gemacht werden. Dies stellt aber ein potenzielles Datenschutzproblem dar, sofern es sich um private Daten des Benutzers handelt. Ein Verschlüsselungsmechanismus für Übertragung und Speicherung der Daten auf dem Server wäre nötig, um einen Zugriff durch Dritte zu verhindern. Zudem wird ein erhöhtes Datenübertragungsvolumen benötigt, um große Datenbanken auf den Server zu laden und regelmäßig zu aktualisieren. Dies kann insbesondere bei über Mobilfunk angebundenen Systemen kostenintensiv sein.

Demnach besteht das Interesse, dem Benutzer eine sprachgesteuerte Bedienung von Geräten und/oder Gerätefunktionen zu ermöglichen. Insbesondere ist eine Spracherkennung frei formulierter Äußerungen erstrebenswert. Zusätzlich existiert eine Anzahl benutzerspezifischer Begriffe, wie Adressbucheinträge, die für eine benutzerfreundliche Sprachsteuerung ebenfalls erkannt werden sollen.

Ausgehend von diesen Anforderungen ist es Aufgabe der vorliegenden Erfindung, ein Verfahren anzugeben, welches Steuerungsbefehle aus mündlichen Äußerungen sicher und effizient erzeugt. Des Weiteren soll die Erfindung ein System bereitstellen, welches zur Durchführung eines entsprechenden Verfahrens ausgebildet ist.

Diese Aufgabe wird durch ein Verfahren gemäß Anspruch 1 und durch ein System gemäß Anspruch 8 gelöst.

Erfindungsgemäß wird die Aufgabe, eine mündliche Äußerung zu erkennen und zu verarbeiten, auf zwei Spracherkennungseinrichtungen verteilt. Dadurch können die Vorteile der jeweiligen Spracherkennungseinrichtung ausgenutzt werden und die Übertragung großer Datenmengen eingespart werden.

Vorzugsweise handelt es sich bei der ersten Spracherkennungseinrichtung um eine server-basierte Spracherkennung, die aufgrund einer höheren Rechenleistung und eines umfangreicheren Vokabulars in der Lage ist, auch frei formulierte Äußerungen zu erkennen und zu deuten. Diese erste Spracherkennungseinrichtung kann jedoch einzelne benutzerspezifische Wörter, wie beispielsweise Adressbucheinträge oder Musiktitel, möglicherweise nicht oder nur schlecht erfassen.

Diese Wörter können aber in einer oder mehreren Datenbanken auf einem oder mehreren Speichermedien vorliegen. Dabei kann es sich insbesondere um Speichermedien in mobilen Geräten des Benutzers (z.B. Fahrzeug, Mobiltelefon) handeln.

Eine zweite Spracherkennungseinrichtung erkennt mindestens teilweise die von der ersten Spracherkennung nicht erkannten Wörter, sofern es sich um Wörter aus einer der lokalen Datenbanken handelt. In der Regel wird die zweite Spracherkennungseinrichtung so beschaffen sein, dass sie freie Formulierungen nicht erkennen kann, sondern zu einem von der ersten Spracherkennungseinrichtung weitgehend erkannten Sprachbefehl einzelne Begriffe aus den lokalen Datenbanken ergänzt und mit diesen kombiniert.

Vorzugsweise existiert eine Recheneinheit mit der zweiten Spracherkennungseinrichtung, die mit den lokalen Datenbanken verbunden ist. Da die zur Durchführung des Verfahrens benötigte Hardware (z.B. Mikrofon, Sende-/Empfangseinheit, Recheneinheit) in vielen Geräten bereits vorhanden ist, kann es vorteilhaft sein, vorhandene Geräte (Fahrzeug, Mobiltelefon, o.ä.) zu verbinden und für das beschriebene Verfahren einzusetzen. Die Verbindung kann insbesondere lokal über eine kurzreichweitige drahtlose Kommunikation ("short range devices") oder drahtgebunden ausgeführt sein.

Um aus dem erkannten Sprachbefehl einen Steuerungsbefehl für z.B. ein Fahrzeug zu erzeugen, kann die erste Spracherkennungseinrichtung einen Satz von fahrzeugspezifischen Befehlen umfassen. Aus dem erkannten Sprachbefehl wird dann ein Steuerungsbefehl erzeugt, der an eine Recheneinheit mit der zweiten Spracherkennungseinrichtung gesendet wird und von dieser bei Bedarf um einzelne Begriffe ergänzt und schließlich ausgegeben wird.

Ein Gedanke der vorliegenden Erfindung besteht darin, dass die zu erkennenden Daten bei der entsprechenden Spracherkennungseinrichtung liegen. So werden die allgemeinen Bestandteile einer Äußerung von einer Spracherkennungseinrichtung auf einem Server erkannt, auf dem ein allgemeines, umfassendes Wörterbuch in der entsprechenden Sprache vorliegt. Diese Spracherkennungssoftware kann demnach benutzerunspezifisch angelegt sein, da sie allgemeines Vokabular betrifft. Auch Aktualisierungen können dann einfacher vorgenommen werden, da sie sich auf alle Benutzer gleichermaßen auswirken können.

Benutzerspezifische Daten werden wiederum von der zweiten Spracherkennungseinrichtung auf dem Gerät des Benutzers erkannt, auf dem die entsprechenden Datenbanken (Adressbuch, Musiksammlung) vorliegen oder mit dem sie lokal verbunden sind.

Dies hat gegenüber einem Hochladen der Datenbanken auf den Server den entscheidenden Vorteil, dass potenzielle Probleme bezüglich Datenschutz oder Datensicherheit nicht auftreten, da die Daten lokal auf dem Gerät verbleiben und der Server keinen Zugriff darauf erhält. Außerdem werden mögliche Mobilfunkkosten vermieden, die durch das Übertragen der Datenbanken und deren laufende Aktualisierung entstehen würden.

Die erste Spracherkennungseinrichtung kann ein oder mehrere Datenpakete erstellen, die das Ergebnis der Spracherkennung sowie eine Kennzeichnung der nicht oder schlecht erkannten Wörter in dem ursprünglichen Sprachbefehl enthalten. Eine mögliche Kennzeichnung kann darin bestehen, dass die erste Spracherkennungseinrichtung Zeit- und/oder Positionsangaben der entsprechenden Wörter innerhalb des Audiodatenstroms übermittelt.

Diese Datenpakete können von einer Recheneinheit empfangen und verarbeitet werden. Als nicht erkannt gekennzeichnete Wörter können identifiziert und zur Erkennung an die zweite Spracherkennungseinrichtung übermittelt werden.

Im Anschluss an die Ausgabe eines Steuerungsbefehls, der sich aus von der ersten und von der zweiten Spracherkennungseinrichtung erkannten Teilen zusammensetzt, kann der Steuerungsbefehl an einen Empfänger übermittelt werden. Bei dem Empfänger kann es sich beispielsweise um ein Navigationsgerät, ein Multimediasystem und/oder eine Freisprecheinrichtung in einem Fahrzeug handeln. Die Kommunikation zwischen dem Sprachbefehlsempfänger und der Recheneinheit erfolgt dann insbesondere über einen Fahrzeugbus. Sprachbefehle können dabei zur Steuerung von Gerätefunktionen (z.B. Wählen einer Telefonnummer, Starten einer Navigation, Abspielen eines Musiktitels, Öffnen/Schließen des Schiebedachs, Verstellen eines Sitzes, Öffnen des Kofferraums) genutzt werden. Somit lässt sich die Bedienung vereinfachen und Platz für Schalter oder Ähnliches einsparen. Während des Fahrens erzeugt eine verbale Bedienung zudem weniger Ablenkung für den Fahrer als eine manuelle Bedienung.

In einem Ausführungsbeispiel kann das Senden des vom Aufnahmegerät aufgezeichneten Audiodatenstroms über ein öffentliches Netzwerk erfolgen. Dabei kann es sich insbesondere um ein Mobilfunknetz handeln. Dies ist vor allem relevant, wenn die Vorrichtungen zur Durchführung der Schritte a) bis f) des erfindungsmäßigen Verfahrens mobil, beispielsweise Teile eines Fahrzeugs, sind. Die Verbindung zum Server muss dann drahtlos ausgeführt sein, beispielsweise über Mobilfunk.

Die Vorrichtungen, die zur Durchführung der Schritte a) bis f) des erfindungsgemäßen Verfahrens vorgesehen sind, sollen ebenfalls verbunden sein. Dabei kann es sich um drahtgebundene Verbindungen (z.B. einen Fahrzeugbus) oder kurzreichweitige drahtlose Verbindungen ("short range devices", z.B. Bluetooth) handeln.

Die genannte Aufgabe kann des Weiteren durch ein System gelöst werden, das mindestens eine Aufnahmeeinrichtung zur Aufzeichnung eines Sprachbefehls und mindestens ein Speichermedium mit mindestens einer Datenbank umfasst, sowie ein Gerät zum Empfangen mindestens eines Datenpakets von einer ersten Spracherkennungseinrichtung, wobei das Datenpaket eine Kennzeichnung nicht erkannter Wörter in dem Sprachbefehl enthält, und eine zweite Spracherkennungseinrichtung zur Erkennung der gekennzeichneten Wörter unter Verwendung der mindestens einen Datenbank. Die zweite Spracherkennungseinrichtung kann in das Gerät zum Empfangen des Datenpakets integriert sein.

Das System kann dazu ausgebildet sein, eines der beschriebenen Verfahren durchzuführen. Ebenso können die beschriebenen Verfahren alle oder einige Komponenten des vorab oder nachfolgend beschriebenen Systems zur Umsetzung der einzelnen Schritte nutzen.

In einem anderen Ausführungsbeispiel umfasst das System zudem eine Recheneinheit mit der zweiten Spracherkennungseinrichtung, wobei zwischen der Recheneinheit, der Aufnahmeeinrichtung und dem Speichermedium eine drahtgebundene Verbindung und/oder eine kurzreichweitige drahtlose Verbindung, insbesondere über Bluetooth, besteht. Insbesondere können sich die verschiedenen Vorrichtungen des Systems in einem einzelnen Gerät befinden. Bei diesem Gerät kann es sich insbesondere um ein Fahrzeug oder ein Mobiltelefon oder einen Teil eines Fahrzeugs oder Mobiltelefons handeln. Es ist auch eine Verteilung der Vorrichtungen auf mehrere verbundene Geräte denkbar.

Das System kann zusätzlich zu den genannten Vorrichtungen auch einen Server umfassen, auf dem sich die erste Spracherkennungseinrichtung befindet. Zwischen dem Server und der Recheneinheit mit der zweiten Spracherkennungseinrichtung soll eine drahtlose Verbindung über ein öffentliches Netzwerk bestehen. Dabei kann es sich insbesondere um ein Mobilfunknetzwerk handeln. Der Server ist insbesondere weitgehend ortsfest, während die weiteren Bestandteile des Systems mobil ausgeführt werden können. Der Server kann einen Web-Service anbieten und damit über das Internet erreichbar sein.

In einem weiteren Ausführungsbeispiel umfasst das System zudem ein Fahrzeug, wobei eine oder mehrere Vorrichtungen zur Durchführung des Verfahrens, mit Ausnahme des Servers, Teile des Fahrzeugs sind. Zum Beispiel können die Recheneinheit, das Speichermedium und/oder die Aufnahmeeinrichtung in dem Fahrzeug vorhanden sein. Es ist beispielsweise möglich, dass der Bordcomputer des Fahrzeugs die Recheneinheit darstellt, sich eine der Datenbanken auf einem internen Speicher des Fahrzeugs befindet und die Aufnahmeeinrichtung das Mikrofon eines Mobiltelefons ist. Das Telefon kann über Bluetooth mit dem Fahrzeug verbunden sein. Ein Vorteil besteht hierbei darin, dass die benötigte Hardware (Speichermedium, Aufnahmeeinrichtung, Recheneinheit) bereits vorhanden und miteinander verbunden ist bzw. eine Verbindung leicht herstellbar ist.

Die Recheneinheit kann dazu ausgebildet sein, den aus dem erkannten Sprachbefehl erzeugten Steuerungsbefehl an mindestens ein Gerät zur Steuerung von Gerätefunktionen zu übermitteln. Die Übermittlung kann über einen Fahrzeugbus erfolgen. Bei den empfangenden Geräten kann es sich im Besonderen um ein Navigationssystem, ein Multimediasystem und/oder eine Freisprecheinrichtung in einem Fahrzeug handeln.

Die genannte Aufgabe wird ferner durch ein computerlesbares Medium mit Instruktion gelöst, welche, wenn sie auf einer Recheneinheit ausgeführt wird, zur Durchführung eines der oben beschriebenen Verfahren vorgesehen ist.

Weitere vorteilhafte Ausführungsbeispiele ergeben sich anhand der Unteransprüche.

Nachfolgend wird die Erfindung mittels mehrerer Ausführungsbeispiele beschrieben, die anhand von Abbildungen näher erläutert werden. Hierbei zeigen:
- Fig. 1: ein Ablaufdiagramm des Verfahrens;
- Fig. 2: eine Darstellung des Systems;
- Fig. 3: ein System mit einem Fahrzeug und einem Mobiltelefon;
- Fig. 4: einen Sprachbefehl, der eine Vielzahl von Wörtern umfasst;
- Fig. 5: aus einem Sprachbefehl erzeugte Steuerungsbefehle und Informationen;
- Fig. 6: eine Erkennung nicht erkannter Wörter durch eine zweite Spracherkennungseinrichtung; und
- Fig. 7: ein Zusammensetzen von Teilen eines Steuerungsbefehls zu einem Steuerungsbefehl.

In den nachfolgenden Beschreibungen werden für gleich und gleich wirkende Teile dieselben Bezugsziffern verwendet.

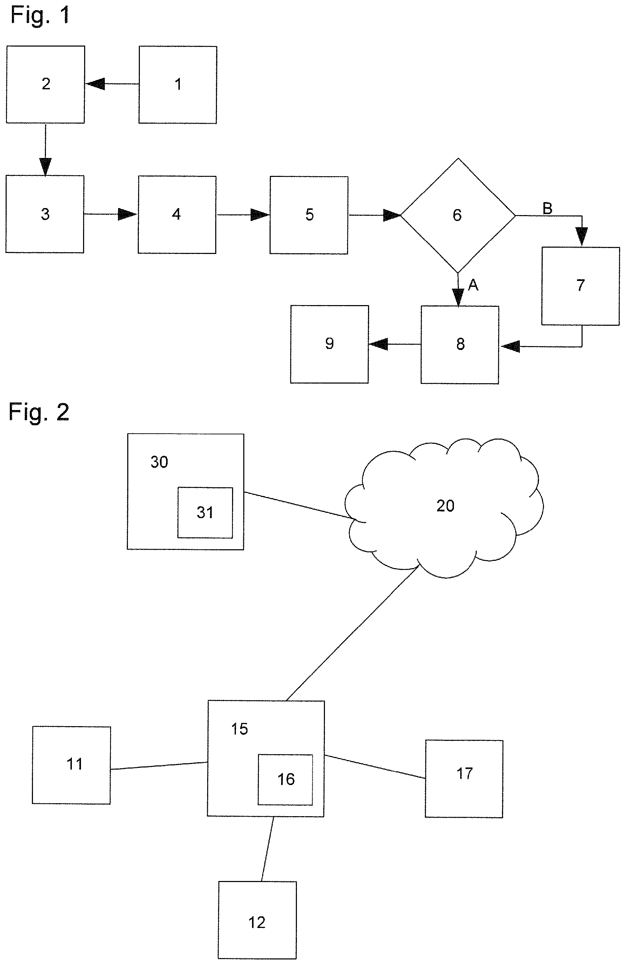

In der Fig. 1 ist ein möglicher Ablauf des Verfahrens dargestellt. Zu Beginn wird ein Sprachbefehl als Audiodatenstrom aufgezeichnet 1. Dieser Audiodatenstrom wird an eine erste Spracherkennungseinrichtung gesendet 2. Die erste Spracherkennungseinrichtung überprüft und erkennt 3 den Inhalt des Audiodatenstroms und kennzeichnet 4 erkannte und nicht erkannte Teile der Aufzeichnung. Das solchermaßen erzeugte Ergebnis wird empfangen 5 und so verarbeitet, dass eine Aufteilung 6 in Anteile mit erfolgreicher A und nicht erfolgreicher B Spracherkennung durchgeführt wird. Nicht erkannte Anteile B werden von einer zweiten Spracherkennungseinrichtung zumindest teilweise erkannt 7. Die so gewonnenen Informationen werden mit den erkannten Anteilen A aus der ersten Spracherkennungseinrichtung zu einem Steuerungsbefehl zusammengesetzt 8. Schließlich wird der Steuerungsbefehl an einen Empfänger übermittelt 9.

Fig. 2 zeigt die Struktur eines entsprechenden Systems, das für die Durchführung des genannten Verfahrens ausgebildet ist. Eine Recheneinheit 15 ist mit einer Aufnahmeeinrichtung 11, einem Speichermedium 17 und einem Steuerungsbefehlsempfänger 12 verbunden. Über ein Netzwerk 20 ist die Recheneinheit 15 zudem mit einem Server 30 verbunden. Auf dem Server 30 befindet sich eine erste Spracherkennungseinrichtung 31 und auf der Recheneinheit 15 eine zweite Spracherkennungseinrichtung 16.

Die Verbindung zwischen der Recheneinheit 15, der Aufnahmeeinrichtung 11, dem Speichermedium 17 und dem Steuerungsbefehlsempfänger 12 ist über eine Nahkommunikation (z.B. Fahrzeugbus, Bluetooth) hergestellt. Die Verbindung von der Recheneinheit 15 zum Server 30 erfolgt über ein, insbesondere drahtloses, Netzwerk, also beispielsweise ein Mobilfunknetz.

Dadurch ist es prinzipiell möglich, dass die Recheneinheit 15, die Aufnahmeeinrichtung 11, das Speichermedium 17 und der Steuerungsbefehlsempfänger 12 in einem Gerät verbaut sind. Es kann sich auch um mehrere Geräte handeln, die miteinander verbunden sind. Da die Komponenten 11, 15, und 17 in vielen modernen Geräten (wie Mobiltelefonen, Fahrzeugen, Notebooks) vorhanden sind, ist es insbesondere vorteilhaft, solche Geräte zu verbinden und für die Durchführung des Verfahrens zu verwenden. Der Server 30 ist in jedem Fall nicht mit einem der anderen Vorrichtungen in einem Gerät.

Die erste Spracherkennungseinrichtung 31 auf dem Server 30 ist vorzugsweise so ausgeführt, dass sie ein umfangreiches Vokabular erfassen und freie Formulierungen verstehen kann. Eine wesentliche Eigenschaft ist zudem, dass die Spracherkennungseinrichtung eine Kennzeichnung 4 der Teile des Audiodatenstroms vornehmen kann, die nicht oder nur schlecht erkannt wurden.

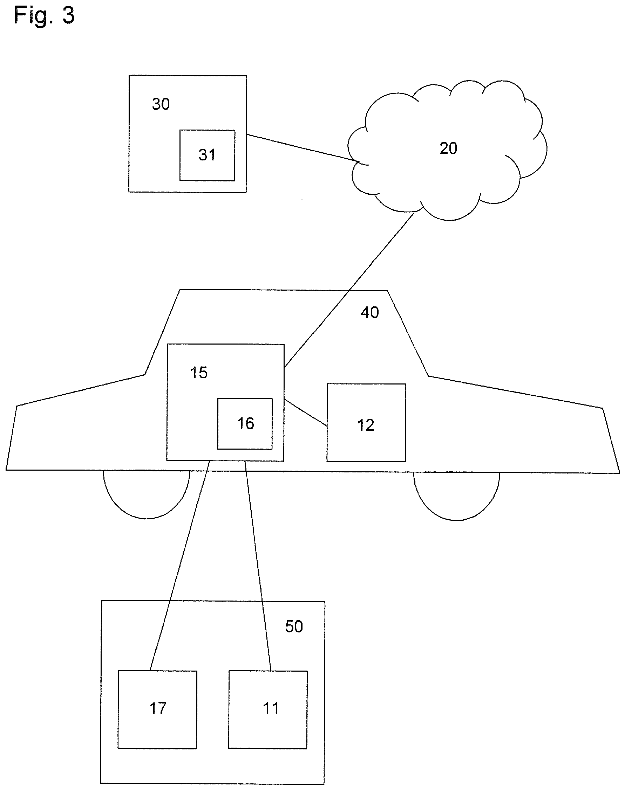

Ein Ausführungsbeispiel des Systems aus Fig. 2 ist in Fig. 3 gezeigt. Hier sind zusätzlich zu den bereits genannten Vorrichtungen ein Fahrzeug 40 und ein Mobiltelefon 50 dargestellt. In der gezeigten Anordnung ist die Recheneinheit 15 ein Teil des Fahrzeugs 40. Sie kann also beispielweise durch den Bordcomputer implementiert sein. Der Empfänger 12 des Steuerungsbefehls befindet sich ebenfalls im Fahrzeug 40. Es kann sich hierbei also um das Multimedia- oder Infotainment-System des Fahrzeugs 40 handeln. Das Speichermedium 17 mit Daten eines Benutzers ist eine Speicherkarte im Mobiltelefon 50. Die darauf liegenden Daten können zum Beispiel Kontaktdaten aus dem Adress- oder Telefonbuch oder Titel aus einer Musiksammlung sein. Als Aufnahmegerät 11 für den Sprachbefehl dient im gezeigten Beispiel das Mikrofon des Mobiltelefons.

Das Telefon 50 ist mit dem Fahrzeug 40 über Bluetooth oder eine andere kurzreichweitige Kommunikation verbunden. Die Verbindung kann auch drahtgebunden ausgeführt sein.

Insbesondere sind im in Fig. 3 gezeigten Ausführungsbeispiel die Recheneinheit 15, die Aufnahmeeinrichtung 11, das Speichermedium 17 und der Steuerungsbefehlsempfänger 12 mobil. Der Server 30 ist im Allgemeinen ortsfest und die Verbindung mit der Recheneinheit 15 besteht über ein drahtloses Netzwerk 20.

Neben der in Fig. 3 dargestellten Ausführung sind weitere Ausführungen denkbar, in denen die Recheneinheit 15 beispielsweise durch einen weiteren im Fahrzeug 40 verbauten Prozessor oder den Prozessor des Mobiltelefons 50 ausgeführt ist.

Die Aufnahmeeinrichtung 11 kann neben dem Mikrofon des Mobiltelefons 50 ein zum Fahrzeug 40 gehörendes Mikrofon, z.B. die Freisprecheinrichtung oder ein speziell für Sprachsteuerung vorgesehenes Mikrofon sein.

Das Speichermedium 17 kann zusätzlich zu der Speicherkarte des Mobiltelefons 50 auch der interne Telefonspeicher sein. Darüber hinaus kann das Speichermedium 17 auch ein interner Speicher im Fahrzeug 40 oder ein mit dem Fahrzeug 40 verbundener USB-Stick, eine Festplatte oder Ähnliches sein.

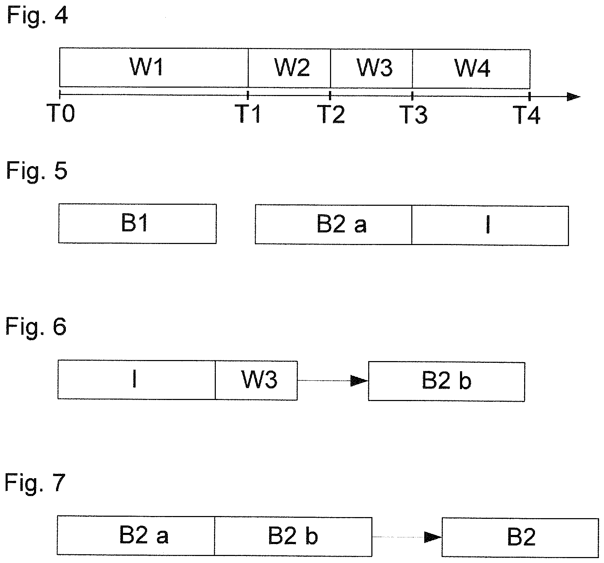

Ein Beispiel für eine Erzeugung eines Steuerungsbefehls B gemäß dem erfindungsgemäßen Verfahren mit dem in Fig. 3 gezeigten System ist in den Fig. 4 bis 7 gezeigt:
Ein Sprachbefehl wird in das Mikrofon 11 des Mobiltelefons 50 gesprochen. Zum Beispiel sei dies der Satz: "Schließe die Fenster und rufe Tobias Birn an." Vom Bordcomputer 15 des Fahrzeugs 40 wird die Aufnahme des Sprachbefehls über ein Mobilfunknetz 20 an den Server 30 gesendet und dort spracherkennungsdienstlich verarbeitet. Dabei entspricht der Satzteil "Schließe die Fenster" W1, der Teil "und rufe" W2, der Teil "Tobias Birn" W3 und der Teil "an" W4 in der Fig. 4. Die Spracherkennungssoftware 31 erkennt W1, W2 und W4, nicht jedoch W3. Wie in Fig. 5 gezeigt, erzeugt die Spracherkennungseinrichtung 31 aus W1 den Steuerungsbefehl B1 zum Schließen der Fenster. Aus den erkannten Wörtern W2 und W4 erzeugt die Spracherkennungseinrichtung 31 den Steuerungsbefehl B2a, einen Anruf auszuführen, verbunden mit der Information I, dass sich dieser Befehl auf den Teil des Sprachbefehls zwischen den Zeitmarken T2 und T3 bezieht. Diese Information I wird vom Bordcomputer 15 empfangen. Wie in Fig. 6 gezeigt, wird der durch die Angabe der Zeitmarken T2 und T3 gekennzeichnete Abschnitt W3 von einem auf dem Bordcomputer 15 installierten Spracherkennungsprogramm 16 unter anderem mit Wörtern aus dem Adressbuch des Benutzers verglichen. In Fig. 7 wird der erkannte Name "Tobias Birn" B2b vom Bordcomputer 15 mit dem Steuerungsbefehl B2a zu einem Steuerungsbefehl B2 kombiniert, der einen Anruf an Tobias Birn auslöst.

Außer den in den Fig. 4 bis 7 und in der dazugehörigen Beschreibung erwähnten Äußerungen W und Steuerungsbefehlen B können beliebige Äußerungen W und Steuerungsbefehle B verwendet werden. Der Steuerungsbefehl B kann zudem auch von der Recheneinheit 15 erzeugt werden.

Die Kennzeichnung der nicht erkannten Wörter W kann außer durch Zeitmarken T auch durch andere charakterisierende Maßnahmen erreicht werden.

Die Erkennung des Sprachbefehls B kann auch zunächst durch die zweite Spracherkennungseinrichtung 16 erfolgen und dann zur Erkennung allgemeiner Äußerungen an die erste Spracherkennungseinrichtung 31 gesendet werden.

Die einzelnen beschriebenen Ausführungsbeispiele lassen sich in verschiedener Weise erfindungsgemäß kombinieren.

### Bezugszeichenliste

- 1: Aufnehmen eines Sprachbefehls
- 2: Senden der Aufnahme an ein erstes Spracherkennungssystem
- 3: Erkennung durch ein erstes Spracherkennungssystem
- 4: Kennzeichnung nicht erkannter Teile der Aufzeichnung
- 5: Empfangen des Ergebnisses
- 6: Aufteilung der Aufnahme in Anteile mit
A: erfolgreicher Spracherkennung
B: nicht erfolgreicher Spracherkennung
- 7: Spracherkennung durch ein zweites Spracherkennungssystem
- 8: Zusammenführen der Spracherkennungsergebnisse
- 9: Übermittlung des Steuerungsbefehls an einen Empfänger
- 11: Sprachbefehlsaufnahmeeinrichtung
- 12: Steuerungsbefehlsempfänger
- 15: Recheneinheit
- 16: Zweites Spracherkennungssystem
- 17: Speichermedium
- 20: Netzwerk
- 30: Server
- 31: Erstes Spracherkennungssystem
- 40: Fahrzeug
- 50: Mobiltelefon
- W1-W4: Abschnitte eines oder mehrerer Wörter in einem Sprachbefehl
- T0-T4: Zeitmarken in einem Audiodatenstrom
- B1/2: Steuerungsbefehle
- I: Information über nicht erkannte Wörter

## Patentansprüche

1. Verfahren zur Erzeugung eines ersten Steuerungsbefehls (B), umfassend die Schritte:
a) Aufzeichnen (1) eines Sprachbefehls, der eine Vielzahl von Wörtern (W) umfasst, als Audiodatenstrom durch eine Aufnahmeeinrichtung (11);
b) Senden (2) des Audiodatenstroms über ein Netzwerk (20) an eine erste Spracherkennungseinrichtung (31);
c) Erzeugung von zweiten Steuerungsbefehlen (B1) und dritten Steuerungsbefehlen (B2a) aus den erkannten Wörtern durch die erste Spracherkennungseinrichtung (31);
d) Empfangen (5), insbesondere über das Netzwerk (20) mindestens eines Datenpakets von der ersten Spracherkennungseinrichtung (31), wobei das Datenpaket die zweiten und dritten Steuerungsbefehle (B1, B2a) und Informationen (I) enthält, welche Wörter (W) in dem Audiodatenstrom nicht erkannt wurden;
e) Zumindest teilweises Erkennen (7) der von der ersten Spracherkennungseinrichtung (31) nicht erkannten Wörter (W) durch eine zweite Spracherkennungseinrichtung (16) unter Verwendung mindestens einer Datenbank;
f) Erzeugung eines vierten Steuerungsbefehls (B2b) aus den zumindest teilweise erkannten Wörtern der zweiten Spracherkennungseinrichtung (31);
g) Zusammensetzen der dritten und vierten Steuerungsbefehle (B2a, B2b) zu einem fünften Steuerungsbefehl (B2);
h) Zusammensetzen (8) der zweiten und fünften Steuerungsbefehle (B1, B2) zum ersten Steuerungsbefehl (B); und
i) Ausgeben des ersten Steuerungsbefehls (B).

2. Verfahren nach Anspruch 1, **gekennzeichnet durch** den Schritt:
j) ein Kennzeichnen (4) nicht erkannter Wörter (W) in dem Audiodatenstrom durch die erste Spracherkennungseinrichtung (31) und das Erstellen des Datenpakets **durch** die erste Spracherkennungseinrichtung (31).

3. Verfahren nach Anspruch 2,
**dadurch gekennzeichnet, dass**
der Schritt h) umfasst:
Kennzeichnen (4) nicht erkannter Wörter (W) in dem Audiodatenstrom durch Zeit- und/oder Positionsangaben (T) innerhalb des Audiodatenstroms.

4. Verfahren nach einem der vorhergehenden Ansprüche,
**gekennzeichnet durch** den Schritt:
k) Verarbeiten (6) des mindestens einen Datenpakets **durch** eine Recheneinheit (15) und Senden der als nicht erkannt gekennzeichneten Wörter (W) an die zweite Spracherkennungseinrichtung (16).

5. Verfahren nach einem der vorhergehenden Ansprüche,
**dadurch gekennzeichnet, dass**
der Schritt g) umfasst:
Übermittlung (9) des ersten Steuerungsbefehls (B), insbesondere über einen Fahrzeugbus, an mindestens einen Empfänger (12) zur Steuerung von Funktionen.

6. Verfahren nach einem der vorhergehenden Ansprüche,
**dadurch gekennzeichnet, dass**
der Schritt b) umfasst:
das Senden (2) des Audiodatenstroms über ein öffentliches Netzwerk (20), insbesondere ein Mobilfunknetz.

7. Verfahren nach einem der vorhergehenden Ansprüche,
**dadurch gekennzeichnet, dass**
die Vorrichtungen, die zur Durchführung der Schritte a) - g) und i) vorgesehen sind, drahtgebunden und/oder über eine kurzreichweitige drahtlose Kommunikation, insbesondere über Bluetooth, miteinander verbunden sind.

8. System zur Erzeugung eines ersten
Steuerungsbefehls (B), unter Verwendung des Verfahrens nach einem der Ansprüche 1 bis 7, umfassend
- mindestens eine Aufnahmeeinrichtung (11) zur Aufzeichnung (1) eines Sprachbefehls, der eine Vielzahl von Wörtern (W) umfasst; und
- mindestens ein Speichermedium (17) mit mindestens einer Datenbank, **gekennzeichnet durch**:
- ein Gerät zum Empfangen (5) mindestens eines Datenpakets von einer ersten Spracherkennungseinrichtung (31), wobei das Datenpaket eine Kennzeichnung nicht erkannter Wörter (W) in dem Sprachbefehl enthält und
- eine zweite Spracherkennungseinrichtung (16) zur Analyse und Erkennung der gekennzeichneten Wörter unter Verwendung der mindestens einen Datenbank.

9. System nach Anspruch 8, umfassend
- eine Recheneinheit (15) mit dem zweiten Spracherkennungssystem (16) **dadurch gekennzeichnet, dass**
zwischen der Recheneinheit (15), der Aufnahmeeinrichtung (16) und dem Speichermedium (17) eine drahtgebundene Verbindung und/oder eine kurzreichweitige drahtlose Verbindung, insbesondere über Bluetooth, besteht.

10. System nach Anspruch 9, umfassend
- einen Server (30) mit einer ersten Spracherkennungseinrichtung (31), wobei
zwischen der Recheneinheit (15) und dem Server (30) eine drahtlose Verbindung über ein öffentliches Netzwerk (20) besteht.

11. System nach Anspruch 9 oder 10, umfassend
- ein Fahrzeug (40),
**dadurch gekennzeichnet, dass**
die Recheneinheit (15) und/oder das Speichermedium (17) und/oder die Aufnahmeeinrichtung (11) Teile des Fahrzeugs (40) sind.

12. System nach Anspruch 11,
**dadurch gekennzeichnet, dass**
die Recheneinheit (15) dazu ausgebildet ist, den erzeugten ersten Steuerungsbefehl
(B), insbesondere über einen Fahrzeugbus, an mindestens einen Empfänger (12) zur Steuerung von Funktionen zu übermitteln.

13. Computerlesbares Medium mit Instruktion zur Durchführung des Verfahrens gemäß einem der Ansprüche 1 bis 7,
wenn diese auf einer Recheneinheit ausgeführt werden.

## Claims

1. A method for generating a first control command (B), comprising the steps:
a) recording (1) of a voice command that comprises a multiplicity of words (W) as an audio data stream by a recording device (11);
b) sending (2) of the audio data stream via a network (20) to a first voice recognition device (31);
c) generation of second control commands (B1) and third control commands (B2a) from the recognised words by the first voice recognition device (31);
d) receipt (5), more especially via the network (20), of at least one data packet from the first voice recognition device (31), wherein the data packet contains the second and third control commands (B1, B2a) and information (I) concerning which words (W) in the audio data stream have not been recognised;
e) at least partial recognition (7) of the words (W) that have not been recognised by the first voice recognition device (31) by a second voice recognition device (16) using at least one database;
f) generation of a fourth control command (B2b) from the at least partially recognised words of the second voice recognition device (31);
g) compilation of the third and fourth control commands (B2a, B2b) to form a fifth control command (B2);
h) compilation (8) of the second and fifth control commands (B1, B2) to form the first control command (B); and
i) output of the first control command (B).

2. A method according to claim 1,
**characterised by** the step:
j) identification (4) of unrecognised words (W) in the audio data stream by the first voice recognition device (31) and creation of the data packet by the first voice recognition device (31).

3. A method according to claim 2,
**characterised in that**
step h) comprises:
identification (4) of unrecognised words (W) in the audio data stream by time and/or position information (T) within the audio data stream.

4. A method according to any one of the preceding claims,
**characterised by** the step:
k) processing (6) of the at least one data packet by a processing unit (15) and sending of the words (W) identified as being unrecognised to the second voice recognition device (16).

5. A method according to any one of the preceding claims,
**characterised in that**
step g) comprises:
transmitting (9) the first control command (B), more especially via a vehicle bus, to at least one receiver (12) for controlling functions.

6. A method according to any one of the preceding claims,
**characterised in that**
step b) comprises:
the sending (2) of the audio data stream via a public network (20), more especially a mobile communications network.

7. A method according to any one of the preceding claims,
**characterised in that**
the devices provided to carry out steps a) to g) and i) are connected to one another in a wired manner and/or via a short-range wireless communication technology, more especially via Bluetooth.

8. A system for generating a first control command (B) using the method according to any one of claims 1 to 7, comprising
- at least one recording device (11) for recording (1) a voice command comprising a multiplicity of words (W); and
- at least one storage medium (17) comprising at least one database, **characterised by**:
- an apparatus for receiving (5) at least one data packet from a first voice recognition device (31), wherein the data packet contains an identification of unrecognised words (W) in the voice command, and
- a second voice recognition device (16) for analysing and recognising the identified words using the at least one database.

9. A system according to claim 8, comprising
- a processing unit (15) with the second voice recognition system (16), **characterised in that**
a wired connection and/or a short-range wireless connection, more especially via Bluetooth, exists between the processing unit (15), the recording device (16) and the storage medium (17).

10. A system according to claim 9, comprising
- a server (30) with a first voice recognition device (31), wherein a wireless connection exists between the processing unit (15) and the server (30) via a public network (20).

11. A system according to either claim 9 or 10, comprising
- a vehicle (40),
**characterised in that**
the processing unit (15) and/or the storage medium (17) and/or the recording device (11) are parts of the vehicle (40).

12. A system according to claim 11,
**characterised in that**
the processing unit (15) is designed to transmit the generated first control command (B), more especially via a vehicle bus, to at least one receiver (12) for controlling functions.

13. A computer-readable medium with instructions for carrying out the method according to any one of claims 1 to 7,
when these instructions are run on a processing unit.

## Revendications

1. Procédé pour générer une première instruction de commande (B), comprenant les étapes consistant à :
a) enregistrer (1) une instruction vocale comprenant un ensemble de mots (W) comme flux de données audio par une installation d'enregistrement (11),
b) émettre (2) le flux de données audio par un réseau (20) vers une première installation de reconnaissance vocale (31),
c) générer des secondes instructions de commande (B1) et des troisièmes instructions de commande (B2a) à partir des mots reconnus par la première installation de reconnaissance vocale (31),
d) recevoir (5) notamment par le réseau (20), au moins un paquet de données de la première installation de reconnaissance vocale (31), le paquet de données contenant les seconde et les troisième instructions de commande (B1, B2a) et des informations (I) pour les mots (W) qui n'ont pas été reconnus dans le flux de données audio,
e) reconnaître (7) au moins partiellement les mots (W) non reconnus par la première installation de reconnaissance vocale (31) à l'aide d'une seconde installation de reconnaissance vocale (16) en utilisant au moins une banque de données,
f) générer une quatrième instruction de commande (B2b) à partir des mots au moins partiellement reconnus par la seconde installation de reconnaissance vocale (31),
g) regrouper les troisièmes et quatrièmes instructions de commande (B2a, B2b) en une cinquième instruction de commande (B2),
h) regrouper (8) les seconde et cinquième instructions de commande (B1, B2) en une première instruction de commande (B), et
i) émettre la première instruction de commande (B).

2. Procédé selon la revendication 1,
**caractérisé par** l'étape consistant à :
j) caractériser (4) les mots non reconnus (W) dans le flux de données audio par la première installation de reconnaissance vocale (31) et établir le paquet de données par la première installation reconnaissance vocale (31).

3. Procédé selon la revendication 2,
**caractérisé en ce que**
l'étape h) consiste à :
- caractériser (4) les mots non reconnus (W) dans le flux de données audio, par des indications de temps et/ou de positions (T) dans le flux de données audio.

4. Procédé selon l'un des revendications précédentes,
**caractérisé par** l'étape consiste à :
k) traiter (6) au moins un paquet de données à l'aide d'une unité de calcul (15) et émettre les mots (W) caractérisés comme étant non reconnus, vers la seconde installation reconnaissance vocale (16).

5. Procédé selon l'une des revendications précédentes,
**caractérisé en ce que**
l'étape g) consiste à :
- transmettre (9) la premier instruction de commande (B) notamment par un bus de véhicule vers au moins un récepteur (12) pour commander des fonctions.

6. Procédé selon l'une des revendications précédentes,
**caractérisé en ce que**
l'étape b) consiste à :
- envoyer (2) le flux de données audio par un réseau publique (20) notamment un réseau de téléphones mobiles.

7. Procédé selon l'une des revendications précédentes,
**caractérisé en ce que**
des dispositifs sont prévus pour exécuter les étapes a)- g) et i), avec des liaisons filaires et/ou par une communication sans fil à courte portée notamment par Bluetooth.

8. Système pour générer une première installation de commande (B), en utilisant le procédé selon l'une des revendications 1 à 7,
comprenant :
- au moins une installation d'enregistrement (11) pour enregistrer (1) une instruction vocale composée de plusieurs mots (W), et
- au moins une mémoire (17) avec au moins une banque de données, système **caractérisé par** :
- un appareil pour recevoir (5) au moins un paquet de données d'une première installation reconnaissance vocale (31), le paquet de données contenant une caractérisation de mots non reconnus (W) dans l'instruction vocale, et
- une seconde installation de reconnaissance vocale (16) pour analyser et reconnaitre les mots caractéristiques en utilisant au moins une banque de données.

9. Système selon la revendication 8,
comprenant :
- une unité de calcul (15) avec le second système de reconnaissance vocale (16),
système **caractérisé par**
une liaison par fil et/ou une liaison sans fil courte portée notamment par Bluetooth entre l'unité de calcul (15), l'installation de réception (16) et le support de mémoire (17).

10. Système selon la revendication 9,
comprenant :
- un serveur (30) avec une première installation de reconnaissance vocale (31), dans lequel
la liaison sans fil entre l'unité de calcul (15) et le serveur (30) passe par un réseau publique (20).

11. Système selon la revendication 9 ou 10, comprenant :
- un véhicule (40),
**caractérisé en ce que**
l'unité de calcul (15) et/ou la mémoire (17) et/ou l'installation de réception (11) font partie du véhicule (40).

12. Système selon la revendication 11,
**caractérisé en ce que**
l'unité de calcul (15) est conçue pour transmettre la première instruction de commande (B) notamment par un bus de véhicule vers au moins un récepteur (12) pour commander les fonctions à transmettre.

13. Support lisible par un ordinateur avec des instructions pour exécuter le procédé selon l'une des revendications 1 à 7,
lorsque le support est utilisé par une unité de calcul.
